# EUROPÄISCHE PATENTSCHRIFT

(11) **EP 3 484 703 B1**
(45) Veröffentlichungstag und Bekanntmachung des Hinweises auf die Patenterteilung: **28.10.2020**
(21) Anmeldenummer: 17739554.8
(22) Anmeldetag: 12.07.2017
(51) Int. Cl.: B32B 7/02, B32B 7/04, B32B 7/12, B32B 21/04, B32B 21/13, B32B 21/14, B32B 3/06, B32B 3/08, B32B 3/18, B32B 3/14, B32B 7/14

(54) **BRETTSPERRHOLZ-PLATTE**
CROSS LAMINATED TIMBER PANEL
PANNEAU DE BOIS STRATIFIÉ CROISÉ

(30) Priorität: 15.07.2016 DE 102016113132
(43) Veröffentlichungstag der Anmeldung: 22.05.2019
(73) Patentinhaber: Aicher, Simon, 70499 Stuttgart (DE); Eugen Decker Holzindustrie KG, 54497 Morbach (DE)
(72) Erfinder: AICHER, Simon, 54497 Morbach (DE)
(74) Vertreter: Flach Bauer Stahl Patentanwälte Partnerschaft mbB
(86) Internationale Anmeldenummer: PCT/EP2017/067561
(87) Internationale Veröffentlichungsnummer: WO 2018/011270

(56) Entgegenhaltungen:
- EP-A1- 1 069 988
- EP-A1- 2 623 682
- AT-U1- 12 704
- DE-A1- 2 725 008
- DE-A1- 3 840 093
- DE-A1-102012 008 771
- DE-U1- 8 900 698
- US-A- 5 234 747
- US-A1- 2009 218 249

## Beschreibung

Die Erfindung betrifft eine Brettsperrholz-Platte nach dem Oberbergriff des Anspruches 1.

Bei Brettsperrholz handelt es sich um eine mehrschichtige Massivholzplatte, die häufig auch als Dickholz oder Kreuzlagenholz bezeichnet wird. Derartige Brettsperrholz-Platten bilden Massivholztafeln, die im Bauwesen eingesetzt werden.

Sie bestehen üblicherweise aus mehreren über Kreuz flach aufeinanderliegenden Brettlagen, wodurch sie sich vom Brettschichtholz unterscheiden, bei dem die Lagen längs zur Faser angeordnet werden.

Die Brettsperrholzplatte kann dabei häufig als Decke oder Dach eingesetzt werden, ebenso aber auch als Wand oder wandartiger Träger. Hier wird häufig auch von Brettsperrholz-Scheibe gesprochen. Unter dem gewählten Begriff Brettsperrholz-Platte sollen aber all diese Ausführungsformen mitumfasst sein.

Die AT 014 886 U1 zeigt ein Brettsperrholzelement mit zumindest zwei Lagen, welche jeweils mehrere Holzlamellen aufweisen, und mit zumindest einer Decklage, welche mehrere Decklamellen aufweist, wobei die Decklamellen der Decklage eine der benachbarten Lage zugewandte Füllschicht, eine von der benachbarten Lage abgewandte Deckschicht und eine zwischen der Füllschicht und der Deckschicht eingeordnete Zwischenschicht aufweisen. Die Faserrichtung der Zwischenschicht verläuft dabei quer zur Faserrichtung der Deckschicht.

Aus der DE 10 2006 041 305 A1 ist eine Bauplatte bekannt, die als vorgefertigtes Bauelement beim Bau von Häusern verwendet wird. Die Bauplatte ist in der Art eines Brettsperrholzelements ausgebildet, wobei das Brettsperrholzelement zumindest drei miteinander verbundene Lagen aus Einschichtplatten aufweist und wobei die Einschichtplatten aus Massivholzbrettern hergestellt sind.

Die DE 101 63 435 C1 zeigt eine Parkettdiele, deren Deckschicht aus Hartholz besteht, und die eine Mittellage aufweist, die sich bis auf die an die Schmalseiten angrenzenden Bereiche aus von einer Längsseite zur anderen Längsseite mit Abstand nebeneinander verlaufenden Stäbchen aus Weichholz zusammensetzt. Weiterhin gibt es einen Gegenzug aus Weichholz. An einer Längsseite sowie an einer Schmalseite sind durchgehende Kupplungsfedern und an der anderen Längsseite sowie an der anderen Schmalseite angepasste Kupplungsnuten und Rastzungen zum zug- und druckfesten spaltfreien leimlosen Fügen von benachbarten Parkettdielen vorgesehen. Die an die Schmalseiten angrenzenden Bereiche der Mittellage bestehen jeweils aus einem mehrlagigen Sperrholzstreifen, bei dem die Richtungen der Fasern in den einzelnen Lagen abwechselnd in einem von 90° abweichenden Winkel zu den Schmalseiten verlaufen.

Aus der US 2009/0077919 A1 ist ein Fußbodenbrett bekannt, welches mit einem Betonboden verklebt oder mit einem weiteren Unterboden vernagelt werden kann. Das Fußbodenbrett besteht aus einer oberen Hartholzschicht und mehreren darunter liegenden Schichten aus weichem Holz, die miteinander und mit der oberen Schicht verklebt sind. Die Hartholzschicht weist eine Dicke von mindestens 7mm auf, wohingegen die darunter liegenden weichen Schichten zusammen mindestens eine Dicke von 15mm aufweisen.

Der Brettsperrholz-Aufbau umfasst, wie erwähnt, kreuzweise verklebte Lagen aus Vollholzbrettern und/oder Lagen aus Holzwerkstoffen wie beispielsweise Furnierschichtholz (DIN EN 14374 vom Februar 2005) oder sogenannten Grobspanplatten, auch OSB-Platten (DIN EN 300 vom September 2006) genannt (OSB = " oriented strand board" oder "oriented structural board", also Platten aus ausgerichteten Spänen). Daneben kommen auch übliche Spanplatten (DIN EN 312 vom Dezember 2010) oder Mehrschichtplatten oder Massivholzplatten (DIN EN 13353 vom Februar 2009) oder Faserplatten (DIN EN 622-1 vom September 2003, DIN EN 622-2 vom Juli 2004, DIN EN 622-3 vom Juli 2004, DIN EN 622-4 vom März 2010, DIN EN 622-5 vom März 2010) in Frage.

Die tragenden Lagen der Brettsperrholz-Platte sind verklebt. Des Weiteren können auf den Außenseiten der Platte nicht-tragende oder mit-tragende Schichten befestigt sein, die ausschließlich dekorativen Zwecken und/oder Feuerschutz- und/oder Akkustikzwecken (z.B. zur Schalldämmung) dienen. Die äußeren Lagen sind im Allgemeinen aufgeklebt, können jedoch auch mit mechanischen Verbindungsmitteln (Nägel, Klammern, Schrauben etc.) befestigt sein.

Die Querschnittsaufbauten umfassen immer mindestens drei Lagen und können beispielsweise bis zu 9 Lagen und mehr umfassen. Die Dicke der einzelnen Lagen kann variieren. Der Querschnittsaufbau ist im Regelfall symmetrisch zur Querschnittsdickenhalbierenden, kann jedoch auch asymmetrisch sein.

Für die Verklebung der einzelnen Lagen können unterschiedliche Klebstoffe und Klebstofffamilien eingesetzt werden.

Die entsprechenden Vollholzbretter der einzelnen übereinander geschichteten Längs- und Querlagen bestehen heute weltweit nahezu ausschließlich aus Nadelhölzern, in der Regel Fichte, Tanne. Die heutige europäische Norm (EN 16351 aus dem Jahre 2015 (Holzbauwerke - Brettsperrholz - Anforderungen, Deutsche Fassung EN, 2015) betrachtet im vorstehenden Sinne deshalb auch nur Plattenaufbauten aus Nadelholzbrettern, deren Sortierung der weiteren europäischen Norm EN 14081-1 aus dem Jahre 2005 entspricht (Holzbauwerke - Nach Festigkeit sortiertes Bauholz für tragende Zwecke mit rechteckigem Querschnitt - Teil 1: Allgemeine Anforderungen, Deutsche Fassung EN, 2005). Die Bretter können hierbei sowohl visuell und/oder maschinell sortiert sein.

Ein gattungsbildendes Element zur Konstruktion einer Wand oder Decke in Form einer mehrschichtigen Brettsperrholz-Platte ist aus der EP 2 623 682 A1 bekannt geworden. Diese Vorveröffentlichung beschreibt eine Brettsperrholzplatte, die aus mindestens zwei Schichten kreuzweise angeordneter Brettlagen besteht, wobei auf mindestens einer Seite der Brettsperrholzplatte eine Platte aus Holzfaser und/oder Holzspanwerkstoff angeordnet ist.

Aus der AT 12 704 U1 ist ferner ein Holzbaustein als bekannt zu entnehmen. Die beschriebenen Holzbausteine sollen aus Brettsperrholz bestehen und großteils aus den beim Abbinden von Brettsperrholzelementen anfallenden Ausschnitten und/oder Abschnitten hergestellt werden. Dabei ist daran gedacht, beim werkseitigen Abbinden der meist großflächigen Brettsperrholzelemente, wenn beispielsweise Tür- und/oder Fensteröffnungen ausgeschnitten werden, die hier anfallenden Ausschnitte als Holzbausteine zu verwenden.

Dabei ist ebenfalls erwähnt, dass die Brettsperrholzlagen der Holzbausteine durchgängig aus Nadelholz oder Laubholz oder aber auch lagenweise aus unterschiedlichen Holzarten bestehen können. Dabei können die beiden äußeren Decklagen aus Laubholz bestehen und die Kernschicht aus Nadelholz oder - je nach Anwendungsbereich - auch umgekehrt.

Schließlich wird noch auf die DE 10 2012 008 771 A1 verwiesen, die ein Modul aus verleimten Massivholzlamellenstäben beschreibt. Dazu umfasst dieses Modul zumindest zwei Schichten aus horizontal miteinander verleimten Massivholzlamellenstäben, wobei die Massivholzlamellenstäbe der einen Schicht zur anderen Schicht winklig versetzt verlaufen, bevorzugt senkrecht dazu. Brettsperrholzelemente der heutigen oben beschriebenen Bauart weisen einen sehr entscheidenden Nachteil auf, der sich in der sehr niedrigen Rollschubsteifigkeit und Rollschubfestigkeit der Querlagen, die im Regelfall rechtwinklig zur Hauptspannrichtung verlaufen, manifestiert.

Der niedrige Rollschubmodul von Nadelhölzern (beispielsweise in Form von Fichten- oder Tannenholz), der in der Größenordnung von etwa 40 MPa bis etwa 100 MPa liegt, bewirkt einen für die Gebrauchstauglichkeit sehr nachteiligen, hohen Schubdeformationsanteil bei der Durchbiegung balken- bzw. plattenartig beanspruchter Bauteile. Des Weiteren führt die sehr niedrige Rollschubfestigkeit der Nadelholzquerlagen, die abhängig davon ob die Schmalkanten der Querlagenbretter verklebt oder unverklebt sind, eventuell mit Spalten zwischen den Brettern, in der Größenordnung von rund 0,7 MPa bis rund 1,5 MPa liegt, zu einer sehr niedrigen Schubfestigkeit bzw. Querkrafttragfähigkeit der Platten, die sich bei abnehmender Plattenschlankheit 1/d zunehmend negativ auswirkt, wobei 1 die Spannweite oder Kragenarmlänge und d die Gesamtdicke der Brettsperrholzplatte darstellt.

Von daher ist es Aufgabe der vorliegenden Erfindung einen verbesserten Brettsperrholz-Aufbau zu schaffen. Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Zum einen werden durch die vorliegende Erfindung die im Stand der Technik bekannten Nachteile vermieden. Zudem schafft die Erfindung insbesondere auch die Möglichkeit Holz-Abfallstücke zu verwenden. Dadurch werden zum einen die Kosten einer Brettsperrholz-Platte oder eines Brettsperrholz-Trägers niedrig gehalten, wobei im Rahmen der Erfindung gleichwohl in technischer Hinsicht verbesserte Eigenschaften realisiert werden, um eine verbesserte Rollschubsteifigkeit und Rollschubfestigkeit der Querlagen und somit eine höhere gesamte Steifigkeit und Tragfähigkeit (Festigkeit) der gesamten Platte zu gewährleisten.

Im Rahmen der Erfindung wird dies durch die Verwendung unterschiedlicher Hölzer und Holzfamilien realisiert, wobei bei dem Brettsperrholz-Aufbau, also dem so genannten Kreuzlagenholz, bevorzugt Deckschichten unter Verwendung von Nadelhölzern vorgesehen sind, während eine entsprechende Zwischen- oder Mittelschicht eines derartigen Brettsperrholzaufbaus dann ganz oder überwiegend aus Laubhölzern wie z.B. insbesondere Buche und/oder auch anderen Laubholzarten wie z.B. vorzugsweise Pappel, Birke, American Whitewood (Liriodendron tulipifera) oder Light bzw. Dark Red Meranti bestehen kann. Die Laubhölzer können hierbei auch aus unterschiedlichen Holzarten stammen, sofern sie vergleichbare Rollschubeigenschaften aufweisen.

Im Konkreten schlägt die Erfindung eine Brettsperrholz-Platte vor, deren beiden parallel zueinander liegenden Holzlagen zumindest zu 80 Gewichtsprozent und/oder zumindest 80 Volumenprozent aus Nadelhölzern bestehen. Ferner schlägt die Erfindung vor, dass die Zwischenlage zumindest aus 80 Gewichtsprozent und/oder zumindest aus 80 Volumenprozent aus Laubhölzern besteht, wobei die Vielzahl von Laubholzstücken zur Erzeugung mehrerer durchgängiger Bretter in Längsrichtung miteinander verfügt sind. Diese in mehreren zu einem durchgängigen Brett längsverfügten Bretter sind dann zur Erzeugung eines plattenartigen Verbundes in Querrichtung miteinander verfügt.

Die entsprechenden Laubhölzer-Elemente können also dabei, wie erwähnt, aus Abfall-Abschnitten bestehen, die teilweise im Verhältnis zur Gesamtlänge nur eine sehr kurze Länge aufweisen.

Im Gegensatz zu Nadelhölzern liegt der Rollschubmodul und die Rollschubfestigkeit von Laubhölzern insbesondere von zerstreut- und halbringporigen Hölzern mittelhoher Rohdichte (> rund 500 kg/m³) und hoher Rohdichte (≥ rund 600 - rund 700 kg/m³) wie z.B. Buche wesentlich höher.

So beträgt zum Beispiel der Rollschubmodul von Buche rund 300 MPa bis 500 MPa und ist damit rund 5- bis 10-mal höher im Vergleich zu dem Rollschubmodul von Nadelhölzern wie beispielsweise Fichte oder Tanne. Die Rollschubfestigkeit von Buche liegt bei rund 2,5 MPa bis 5 MPa und ist damit rund 4-mal bis 7-mal höher als die Rollschubfestigkeit bei Fichte oder Tanne.

Grundsätzlich ist allerdings anzumerken, dass Laubhölzer und somit auch die bevorzugt zu verwendende Buche bei guten Sortimenten (niedrige Ästigkeit, Rissfreiheit) jedoch durchweg deutlich teurer sind als beispielsweise Fichtenholz. Der preisliche Unterschied liegt abhängig von den verglichenen Sortimenten bei einem Faktor von rund 2 bis 8.

Ferner weisen viele Laubhölzer und insbesondere auch Buche neben den skizzierten positiven Eigenschaften auch Nachteile auf. Als Nachteil ist vor allem das im Vergleich zu Fichtenholz deutlich größere Schwind-Quellverhalten zu erwähnen, ebenso wie ausgeprägte, schwierig zu erkennende Schrägfasrigkeiten. Diese Eigenschaften können dazu führen, dass gerade unverdrehte Längen von 2,0 m bis beispielsweise 3,5 m wie sie für Mittellagen von Brettsperrholz benötigt werden, nur in einem geringen Umfange und dabei auch nur zu sehr hohen Preisen verfügbar sind.

Demgegenüber muss es im Rahmen der Erfindung als durchaus überraschend bezeichnet werden, dass durch die verwendeten Lagen aus Laubholz und dabei insbesondere unter Verwendung von teilweise kurzen Laubholzstücken und Laubholzbrettelementen gleichwohl ein insgesamt verbessertes Brettsperrholz realisierbar ist.

Des Weiteren ist es überraschend, dass normalerweise als minderwertig anzusehende Brettsortimente, z.B. mit sehr großen Ästen, in der besonderen Verwendung als BSP-Mittel-Lage, die Rollschubfestigkeit besonders stark verbessern können.

In einer bevorzugten Ausführungsform der Erfindung ist dabei ferner vorgesehen, dass die gefügten Bretter oder Brettstreifen durchaus an ihren stirnseitigen Fügebereichen Lücken und Spalten aufweisen können. Dies ist für den Verklebungs- und Verpressungsvorgang der mehrlagigen Plattenaufbauten durchaus förderlich und für die spätere Verwendung in mechanischer Hinsicht demgegenüber nur wenig abträglich. Je geringer die Biegesteifigkeit der (Quer-)Lagen ist, umso einfacher und mit umso geringeren Pressdruck kann eine sandwichartige Mittellage zwischen zwei Außen- oder Decklagen (d.h. Decklagen bezüglich der erwähnten Zwischen- oder Mittellage) bzw. den längslaufenden Nachbarlagen verklebt werden, die vorzugsweise weiterhin aus Nadelholz bestehen oder Nadelholz überwiegend umfassen.

Die anderen Lagen können jedoch auch gänzlich aus Plattenwerkstoffen wie z.B. Spanplatten, OSB, LVL, etc. bestehen.

Zusammenfassend kann also festgestellt werden, dass die vorliegende Erfindung einen hybriden Brettsperrholz-Aufbau nach Art einer hybriden Brettsperrholz-Platte betrifft, die eine speziell hergestellte Querlage aus zumindest teilweise minderwertigen kurzen Stücken aus Laubholz umfasst, wobei vorzugsweise Buche verwendet wird. In einer weiter bevorzugten Ausführungsform sind unterschiedliche Varianten möglich, bei denen die aus Laubholz bestehende Zwischenschicht bevorzugt in Längsrichtung gefügt wird.

Die Fügetechniken der Laubholzmittellagen aus kurzen Stücken (die fallweise bestimmten Qualitätsanforderungen an spezielle Sortiermerkmale genügen können oder müssen) können dabei entweder automatisch oder händisch ausgeführt werden. In einem weiteren Schritt können dann die in Längsrichtung gefügten Laubholz-Abschnitte durch Querfügung (also längs der Schmalkanten) zur plattenstreifenartigen Schichten gefügt werden. Alternativ oder ergänzend können die Längs- und die Querfügprozesse auch intermittierend erfolgen.

Die Erfindung wird nachfolgend anhand von Zeichnungen näher erläutert. Dabei zeigen im Einzelnen:
- Figur 1:: eine schematische dreidimensionale Darstellung eines erfindungsgemäßen Brettsperrholz-Aufbaus;
- Figur 2:: eine entsprechende Darstellung zu Figur 1, bei der die in Figur 1 dargestellten Deck- oder Außenschichten noch mit jeweils einer Abdeckplatte überdeckt sind;
- Figur 3a und 3b:: jeweils eine ausschnittsweise Querschnittsdarstellung zur Erläuterung einer Schubverformung bei biegebeanspruchten Brettsperrholzelementen in Folge der schubweichen Brettquerlagen;
- Figur 4a und 4b:: eine ausschnittsweise Querschnittsdarstellung eines dreilagigen Brettsperrholz-Aufbaus zur schematischen Darstellung eines rollschubinduzierten Bruchverhaltens biegebeanspruchter Brettsperrholzelemente in Folge der niedrigen Rollschubfestigkeit der Querlagen aus Nadelholz;
- Figur 5a bis 5d:: vier schematische Beispiele für unterschiedlich längsgefügte Laubholz-Querlagen;
- Figur 6:: eine schematische Darstellung von zusammengefügten Laubholz-Abschnitten, die einmal mittels einer Längsfügung zu Längsbrettern oder Längsleisten zusammengefügt sind, die dann wiederum mittels einer Querfügung zu größeren Einheiten und Platten verbunden sind;
- Figur 7a:: eine zu Figur 6 vergleichbare Darstellung bezüglich eines abgewandelten Ausführungsbeispiels mit einer Querfügung, die abschnittsweise eine Nut und Federverbindung umfasst, und zwar zusätzlich zu einer Endblockierung der Lamellen an den gegenüberliegenden Endbereichen zur Verhinderung einer Relativverschiebung zwischen den einzelnen Lamellen in Längsrichtung;
- Figur 7b:: eine ausschnittsweise dreidimensionale Darstellung des Ausführungsbeispiels nach Figur 7a;
- Figur 8a und 8b:: ein zu Figur 6 und 7a nochmals abgewandeltes Ausführungsbeispiel bezüglich einer abgewandelten Querfüge-Variante, wobei die Längsfügung beispielsweise mittels Hirnholzdübeln und die Querfügung mittels einer Schwalbenschwanz-Verbindung erfolgt;
- Figur 9:: ein nochmals abgewandeltes Beispiel bezüglich einer Querfüge-Verbindung, und zwar mittels eines doppelseitigen Klebebandes oder mittels einer planmäßigen Verklebung der Schmalkanten;
- Figur 10:: ein weiteres abgewandeltes Ausführungsbeispiel, bei welcher die Querfügung bzw. Längs- und Querfügung mittels aufgeklebter, vorzugsweise netzartiger sehr dünner Gitter gegebenenfalls aus Schmelzklebebelag durchgeführt ist; und
- Figur 11:: ein weiteres abgewandeltes Ausführungsbeispiel bezüglich eines Längs- und Querfügungen umfassenden Gesamtverbundes, bei welchem die Querlagen mit abschnittsweisen höherfesten Brettern bzw. Holzwerkstofflamellen zur (plan)-mäßigen Übertragung von Biegemomenten und Querkräften quer zur Plattenlängsrichtung versehen sind.

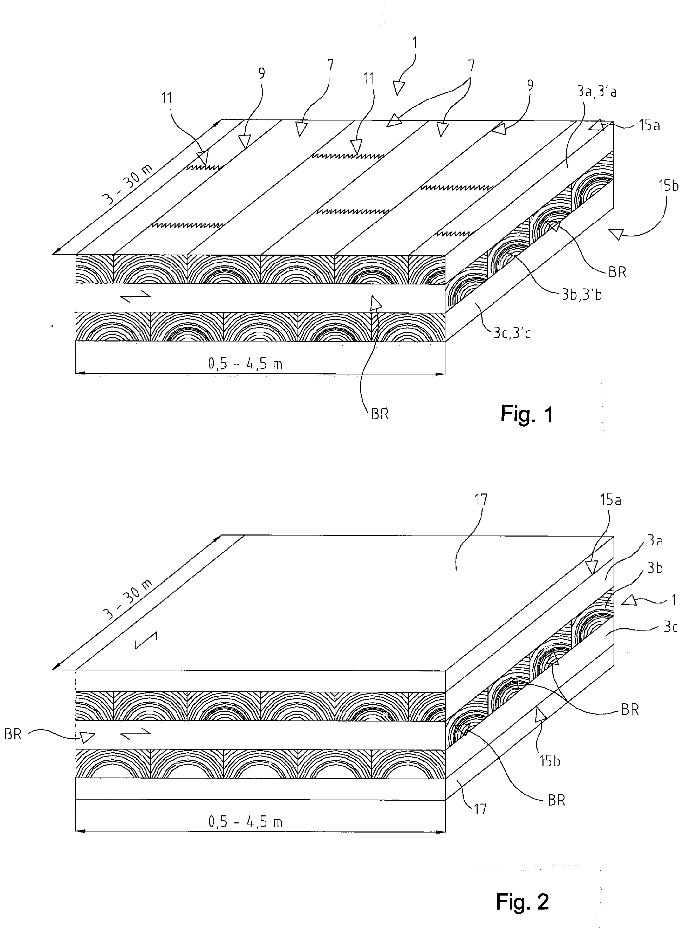

In Figur 1 ist ein dreilagiger Brettsperrholz-Aufbau gezeigt, der aufgrund der unterschiedlich verwendeten Holztypen auch nachfolgend teilweise als hybrides Brettsperrholz oder Hybridbrettsperrholz bezeichnet wird.

Es handelt sich dabei um einen Brettsperrholz-Aufbau in Form einer Brettsperrholz-Platte 1.

Bei dem schematisch wiedergegebenen Ausführungsbeispiel gemäß Figur 1 sind die drei Lagen 3a, 3b und 3c jeweils auf ihrer flächigen Breitseite aufeinander liegend zu einem festen Verbund zusammengefügt.

Die beiden äußeren Lagen 3a und 3c werden dabei auch als Längslagen 3'a und 3'c und die dazwischen befindliche Zwischen- oder Mittellage 3b als Querlage 3'b bezeichnet.

Insoweit wird auch allgemein von einer mehrschichtigen Massivholzplatte oder einem so genannten Kreuzlagenholz gesprochen.

Die gezeigten äußeren Lagen 3a und 3c weisen dabei zum einen längsgefügte Bretter oder Leisten 7 auf, die an ihren seitlichen Längsseiten mit benachbarten ebenfalls für sich längsgefügten Brettern oder Leisten quergefügt sind. Die Längsfügelinien, d.h. die Schmalseiten der Bretter oder Brettabschnitte der Längs- und Querlagen sind bei üblichem Brettsperrholz entweder verklebt (Schmalkantenverklebung) oder unverklebt, wobei die Fugen zwischen nebeneinander liegenden Brettern gemäß EN 16351 bis zu 6 mm betragen dürfen. Die Längsfügelinien 9 und die Querfügelinien 11 sind in Figur 1 angedeutet. Aus der Darstellung gemäß Figur 1 geht auch hervor, dass die Zwischen- oder Mittenlage 3b quer und insbesondere senkrecht zu den äußeren Längslagen 3'a, 3'c verlaufende Bretter oder Leisten BR umfasst, die ebenfalls in Längsrichtung längsgefügt sind und dann an ihren seitlichen Längsseiten parallel nebeneinander liegend quergefügt sind, wodurch sich insgesamt die Kreuzlagen-Anordnung ergibt.

Die einzelnen Bretter können längsverlaufende Nuten aufweisen, die bis zu 90% der Brettdicke umfassen (Anmerkung: die Nuten dienen der Reduzierung der Brettsteifigkeit in Querrichtung zur Verringerung des Widerstandes des mehrlagig geschichteten Aufbaus beim Verpressvorgang der gesamten Platte).

Derartige Brettsperrholz-Platten können in unterschiedlichen Größen hergestellt werden, beispielsweise in Längen von 3 bis 30 m und in Breiten von 0,5 bis beispielsweise 4,5 m. Die genannten Werte können sowohl über- wie unterschritten werden.

Die Dicke der einzelnen Lagen kann ebenfalls variieren. Häufig variiert sie zwischen 10 mm und 50 mm. Die einzelnen Lagen sind dabei üblicherweise gleich dick, können aber durchaus voneinander unterschiedliche Dicken aufweisen. Für die Verklebung der einzelnen Lagen 3a, 3b, 3c, können unterschiedliche Klebstoffe oder Klebstofffamilien eingesetzt werden, wie z.B. Polykondensationsklebstoffe oder feucht-härtende Ein-Komponenten Polyurethanklebstoffe oder Emulsion-Polymer-Isocyanat-Klebstoffe.

Die plattenförmigen Elemente werden bevorzugt in hydraulischen oder Vakuumpressen mit Pressdrücken im Bereich von rund 0,05 MPa bis 0,8 MPa hergestellt. Die Vollholzbretter der einzelnen übereinander geschichteten Längs- und Querlagen besteht bisher üblicherweise aus Nadelhölzern beispielsweise in Form von Fichte und Tanne. Gemäß der vorliegenden Erfindung ist jedoch die erwähnte Zwischen- oder Mittenschicht 3b nunmehr aus Laubhölzern vorzugsweise unter Verwendung von Buche hergestellt, worauf nachfolgend noch genauer eingegangen wird.

Die Variante gemäß Figur 2 unterscheidet sich von dem Aufbau gemäß Figur 1 dadurch, dass der dreilagige Aufbau gemäß Figur 1 an den Außenseiten 15a und 15b noch mit einer Deckplatte 17 überdeckt ist, die grundsätzlich beliebig aufgebaut sein kann.

Der Querschnittsaufbau allerdings kann auch abweichend von Figuren 1 und 2 asymmetrisch bezüglich der Dickenhalbierenden sein.

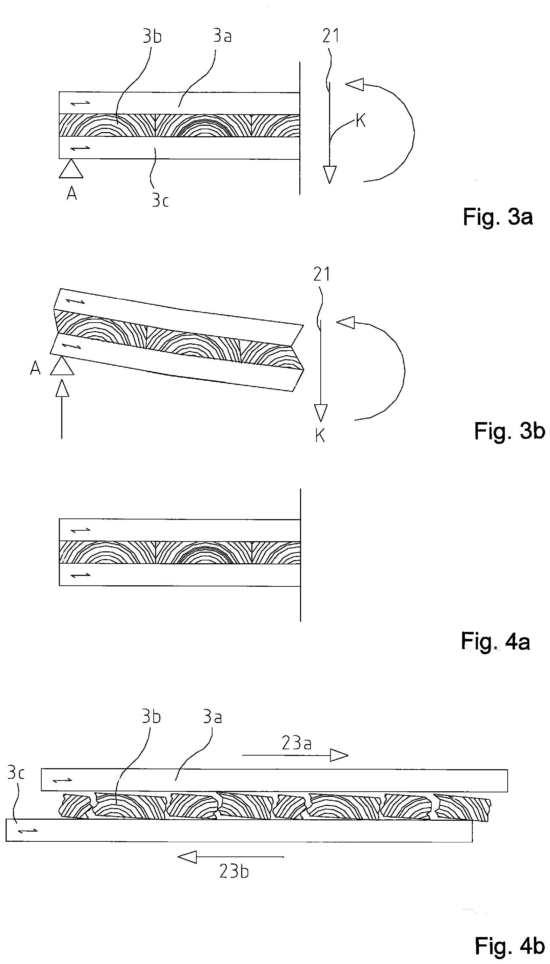

Anhand von Figur 3a und 3b ist gezeigt, welchen Einfluss eine vor allem niedrige Rollschubsteifigkeit der Querlagen auf das Verformungsverhalten der Querlagen und sodann auf die Durchbiegung des gesamten BrettsperrholzAufbaus hat.

In Figur 3a ist dabei ausschnittsweise eine Querschnittdarstellung unter Stirnseitenansicht einer dreilagigen Brettsperrholz-Platte vergleichbar zu Figur 1 gezeigt. In Figur 3a soll eine derartige Platte beispielsweise auf dem in Figur 3a links liegenden Auflager A abgestützt sein. Die Frage ist nunmehr, was passiert, wenn von diesem Auflager A entfernt, in Figur 3a rechts liegend, nunmehr eine Kraftkomponente K entsprechend der Pfeildarstellung 21 auf die Brettsperrholzplatte einwirkt.

Das Ergebnis ist anhand von Figur 3b gezeigt. Die einwirkenden Kräfte führen letztlich zu der erwähnten Schubverformung der biegebeanspruchten Brettsperrholzelemente in Folge der schubweichen Brettquerlage.

Anhand von Figur 4a und 4b ist schematisch dargestellt, wie eine rollschubinduzierte Kraftbeeinflussung zu einem entsprechenden Bruchverhalten biegebeanspruchter Brettsperrholzelemente in Folge einer niedrigen Rollschubfestigkeit der Querlagen führen kann. Denn die entsprechend der Pfeildarstellungen 23a und 23b gegensinnig kraftbeaufschlagten äußeren Lagen 3a, 3c beispielsweise einer dreilagigen Brettsperrholz-Platte 1 erfahren entsprechend der gegensinnigen Pfeildarstellungen ein Drehmoment senkrecht zur Zeichenachse, das auf die einzelnen längs- und quergefügten Bretter oder Leisten 13 einwirkt, die dadurch in Überlagerung mit der reinen Schubbeanspruchung aufbrechen können.

Um hier eine deutliche Verbesserung zu realisieren wird nunmehr für eine entsprechende Zwischen- oder Querlage 3b ein Aufbau verwendet, der zumindest zu 80 Gewichts- oder Volumenprozent aus Laubhölzern besteht oder Laubhölzer umfasst. Dabei kann es sich um Laubhölzer von sehr kurzer Länge handeln, die für übliche Verwendungszwecke mindere und ansonsten unverwertbare Stücke darstellen würden.

Um derartig kurze Laubholzstücke in den häufig automatisierten Legevorgängen verwenden zu können, müssen die in Rede stehenden kurzen (Abfall-)Abschnitte zu brett- bzw. plattenartigen Abschnitten gefügt werden, wobei der Fügeprozess einfach und billig sein soll.

Die gefügten Brett- bzw. Plattenstreifen können dabei Lücken und Spalten aufweisen, was für den Verklebungs- und Verpressvorgang der mehrlagigen Plattenaufbauten sogar förderlich und für die spätere Verwendung in mechanischer Hinsicht nur gering abträglich ist. Je geringer die Biegesteifigkeit der (Quer-)Lagen ist umso einfacher und mit umso geringerem Pressdruck kann die Mittellage zwischen den Decklagen bzw. den längslaufenden Nachbarlagen verklebt werden, die vorzugsweise aus Nadelholz bestehen.

Allerdings ist im Rahmen der Erfindung vorgesehen, dass die vergleichsweise kurzen oder beliebig langen Laubholzstücke in spezieller Weise gefügt sind. Die Fügetechniken der Laubholzmittellagen unter Verwendung der erwähnten kurzen Laubholzstücke können entweder automatisch oder händisch ausgeführt werden.

Nachfolgend werden einige erfindungsgemäße Fügeprozesse der speziellen Laubholzkurzstück-Querlagen angegeben, die sich entweder durch aufeinanderfolgende Fügeprozesse von brettähnlichen Längslagen ergeben, die dann in einem weiteren Schritt durch Querfügungen längs der Schmalkanten zu plattenstreifenartigen Schichten gefügt werden.

Alternativ können die Längs- und Querfügeprozesse auch intermittierend erfolgen.

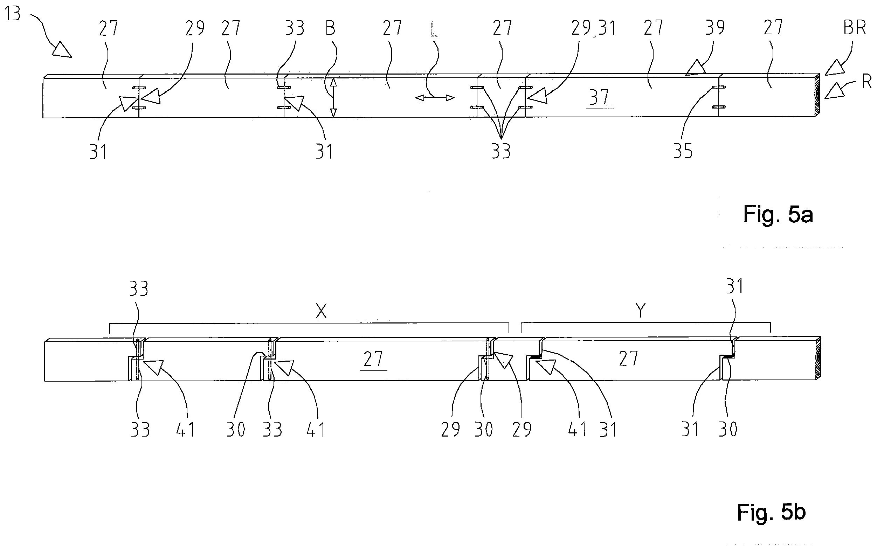

Anhand der nachfolgenden Figuren 5a bis 5d wird gezeigt, wie einzelne in Längsrichtung verlaufende Bretter oder Leisten gefügt werden können, die aus vergleichsweise kurzen Laubholzstücken 27 bestehen. Diese Laubholzstücke 27 oder Holzabschnitte, die nachfolgend teilweise auch als Kurzstücke bezeichnet werden, können alle unterschiedliche Längenmaße aufweisen. Für die Verfügetechnik in Längsrichtung L ist nur wichtig, dass alle Holzstücke in einer Längsreihe R (die also eine einzige längsgefügte Brettleiste ergibt) die gleiche Breite B aufweisen oder - falls sie unterschiedlich breit sein sollen - nachfolgend auf eine gemeinsame Breite B gesägt bzw. gehobelt oder gefräst werden. Bei der Variante gemäß Figur 5a sind beispielsweise sechs Laubholzstücke 27, d.h. sechs Kurzstücke in Längsrichtung L gefügt.

Die vorstehend erwähnten und in den Zeichnungen dargestellten Holzstücke, d.h. die Laubholzstücke 27 bestehen beispielsweise aus Kurzstücken, die kürzer als 50 cm, insbesondere kürzer als 40 cm, 30 cm und kürzer als 20 cm sind bzw. sein können. Beschränkungen bezüglich des Längenmaßes nach oben wie nach unten hin bestehen grundsätzlich nicht.

Die jeweiligen Stirnseiten 29, an denen zwei in Längsrichtung aufeinanderfolgende Laubholzstücke 27 längsgefügt werden, sind bei der Variante gemäß Figur 5a gerade verlaufend ausgebildet, und dabei senkrecht zur Längsrichtung L.

Diese Stirnseiten 29 bilden dann letztlich die Fügekanten 31, die im gezeigten Ausführungsbeispiel mittels Dübel 33 verbunden werden. Im gezeigten Ausführungsbeispiel werden zwei quer zur Längsrichtung L versetzt liegende Dübel 33 verwendet, die selbst in Längsrichtung L ausgerichtet verlaufen, und die dabei die Fügekanten 31 der aneinander angrenzenden Kurzstücke überbrücken. Als Fügeverbindung werden bevorzugt Steckdübel verwendet, die in entsprechende Bohrungen 35 an den Stirnseiten 29 und damit an den Fügekanten 31 bevorzugt in Längsrichtung L verlaufend eingebracht sind. Die Steckdübel 33 können dabei entweder mit glatter oder mit profilierter Oberfläche nur durch Formschluss in die Bohrungen 35 eingreifen und dann durch Reibschluss die Zugverbindung erzeugen.

Die Dübel können hierbei in speziellen Fällen aus Buchenholzdübeln mit sehr niedriger Holzfeuchte (von beispielsweise 4% bis 6%) bestehen und kurz vor dem Eintreiben angefeuchtet werden oder Feuchte aus den gefügten Brettern aufnehmen. In jedem Falle quellen die Dübel 33 hierbei auf und erzeugen so dann einen deutlich verbesserten Form-Reibschluss. Alternativ können die Dübel 33 auch eingeklebt werden. Hierbei können beliebige Klebstoffe verwendet werden, die nicht zwingend für tragende Zwecke im Bauwesen zugelassen sein müssen, da den Längsverbindungen keine planmäßige Lastübertragung zugewiesen wird.

Im gezeigten Ausführungsbeispiel werden durch diese Variante beispielsweise sechs Laubholzstücke 27 in Längsrichtung L längs gefügt, und zwar an jeder Fügekante 31 unter Verwendung von einem Paar von Dübeln (wobei hier bei Bedarf auch noch mehrere längs der Fügekante 31 versetzt liegende Dübel verwendet werden können). Dadurch lassen sich letztlich längsgefügte Bretter BR oder Leisten BR in einer benötigten Länge von beispielsweise ungefähr 2m bis ungefähr 5m herstellen.

Alternativ oder ergänzend zu der bisher erläuterten Längsfügung durch Verwendung von Steck- und/oder Klebedübeln kann der Längsverbund auch durch Verwendung von Rillennägeln oder Klammern, beispielsweise unter Verwendung von aus Aluminium bestehenden Alurillennägeln oder Klammern hergestellt werden, in denen die Klammern beispielsweise von den Brettbreitseiten und/oder den Brettschmalseiten 39 in das Holz so eingetrieben werden, dass durch die Rillennägel oder Klammern die an den Stirnseiten 29 benachbart oder aneinander anliegenden Laubholzstücke 27 über die Fügekante 31 hinweg fest aneinander verbunden sind. Gegebenenfalls können diese Maßnahmen auch zusätzlich zu den Dübeln eingesetzt werden.

Bei der Variante gemäß Figur 5b ist ergänzend gezeigt, dass die miteinander verbundenen Stirnseiten 29 bei dem Längsfügevorgang eine Abstufung 41 aufweisen können. In diesem Falle ergibt sich ein Stirnseiten- oder Fügekanten-Abschnitt 30, der beispielsweise exakt in Längsrichtung, also parallel zu den Längsseitenkanten oder zumindest schräg dazu verläuft. In diesem Falle kann dann ein entsprechender Dübel 33 bevorzugt senkrecht oder schräg zu diesem Stirnseiten- bzw. Fügekantenabschnitt 30 verlaufend in entsprechende Bohrungen eingesetzt werden, worüber zwei aufeinander folgende Laubholzstücke 27 miteinander verbunden sind. In die in Figur 2 senkrecht zur Längsrichtung L verlaufenden Abschnitte der Stirnseiten 29 können dann aber zusätzlich noch, wie in Figur 5a gezeigt, der eine oder andere Dübel 33 in die in Längsrichtung L verlaufenden Bohrungen eingesetzt werden, wobei die Bohrungen an den beiden gegenüberliegenden Stirnseiten fluchtend zueinander eingebracht sind, so dass ein jeweiliger Dübel 33, wie in Figur 5a gezeigt ist, über die Fügekante 31 hinweg in die beiden Endbereiche zwei aufeinander folgender Laubholzstücke 27 eingetrieben werden kann.

Ergänzend können aber auch noch die anderen oben genannten Maßnahmen alternativ oder ergänzend eingesetzt werden, also die erläuterten Rillennägel oder die von den Brettbreitseiten und/oder den Brettschmalseiten einzutreibenden Klammern, die mit ihrer im Wesentlichen U-förmigen Gestalt es erlauben, dass die beiden versetzt zueinander liegenden Schenkel der U-förmigen Klammern in entsprechend benachbart zur Fügekante liegenden Abschnitten der darüber zu verbindenden Laubholzstücke 27 eingetrieben werden, so dass der Querverbindungsabschnitt der U-förmigen Bügel die Fügekante überbrückt.

In dem Ausführungsbeispiel gemäß Figur 5b ist bezüglich der Fügekanten 30, 31 in dem Abschnitt X dargestellt, das die einzelnen Laubholzstücke 27 vor allem unter Verwendung von Dübel 33 miteinander verbunden werden. Wie gesagt können diese Dübel in die Bohrungen auch eingeklebt sein. Zusätzlich kann zu den Dübeln an den aneinander angrenzenden Stirnkanten auch Klebstoff eingesetzt werden. Bei den Laubholzstücken 27 in Figur 5b, die auf der rechten Seite Y dargestellt sind, sind die beiden rechtsliegenden Fügekanten unter Verwendung von Klebstoff miteinander verklebt, d.h. vor allem an den in Längsrichtung L verlaufenden Abschnitten der Fügekanten 30 und/oder aber auch an den quer bzw. senkrecht dazu verlaufenden Fügekanten 31.

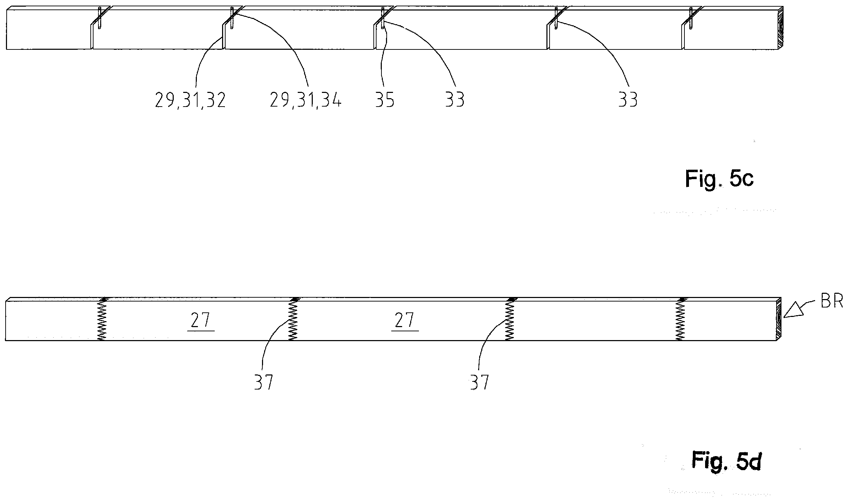

Bei der Variante gemäß Figur 5c ist nur gezeigt, dass die Stirnseiten 29 und damit die Fügekanten 31 exakt quer oder senkrecht zur Längsrichtung L der Laubholzstücke 27 verlaufende Stirnseiten und/oder Fügekanten-Abschnitte 32 und daneben schräg zur Längsrichtung verlaufende Fügekanten-Abschnitte 34 aufweisen können, wobei auch hier über die schräg verlaufenden Stirnseiten und/oder Fügekantenabschnitt 34 hinweg ein entsprechender Dübel 33 eingetrieben werden kann, der also die Fügekante 30 durchsetzt. Dabei ist anhand von Figur 5c auch zu ersehen, dass die Bohrungen 35 an den beiden angrenzenden Endabschnitten der Laubholzstücke 27 und damit der hier eingesetzte Dübel 33 nicht zwingend senkrecht zum schrägen Verlauf des Flügelkanten-Abschnitts 34 und damit zu den entsprechenden Stirnseiten-/Fügekantenabschnitt 30 ausgerichtet sein müssen.
Bei der Variante gemäß Figur 5d ist gezeigt, dass die Fügeteile an den Stirnseiten konstruktiv oder mit nachweislich tragender (zu überwachender) Längsklebeverbindungen beispielsweise in Form von Keilzinkenverbindungen 37 oder Schäftungen verbunden werden können.

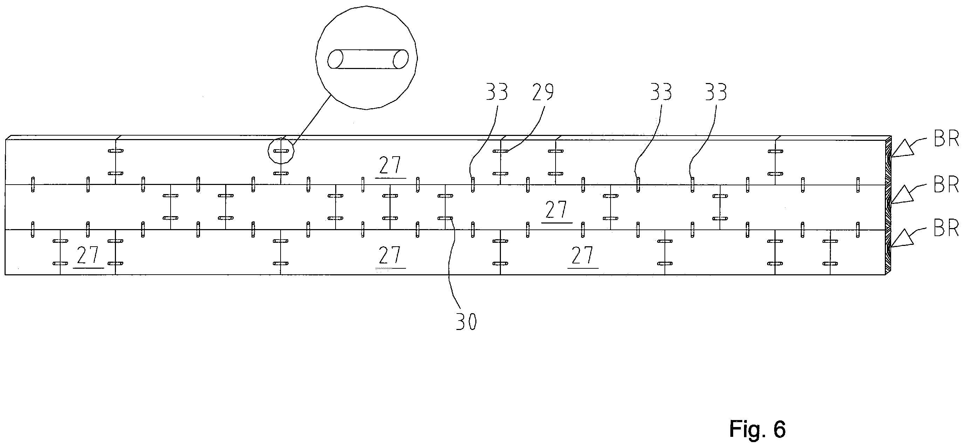

Gemäß der Erfindung ist in einem zweiten oder dazwischen geschalteten Vorfertigungschritt aus mehreren durch Längsfügungen erzeugten Brettern BR dann durch Querfügung ein breiter plattenartiger Verbund V aus zwei, drei, vier oder mehreren längsgefügten Brettern BR erzeugt werden (Figur 6), bei denen durch im Regelfall versetzte Anordnung die Längsstöße der Einzelbretter BR (wie bei den Varianten gemäß Figur 5a bis 5d gezeigt ist), eine vergleichsweise große Biegesteifigkeit der kleinteilig aufgebauten Plattenfläche erreicht wird.

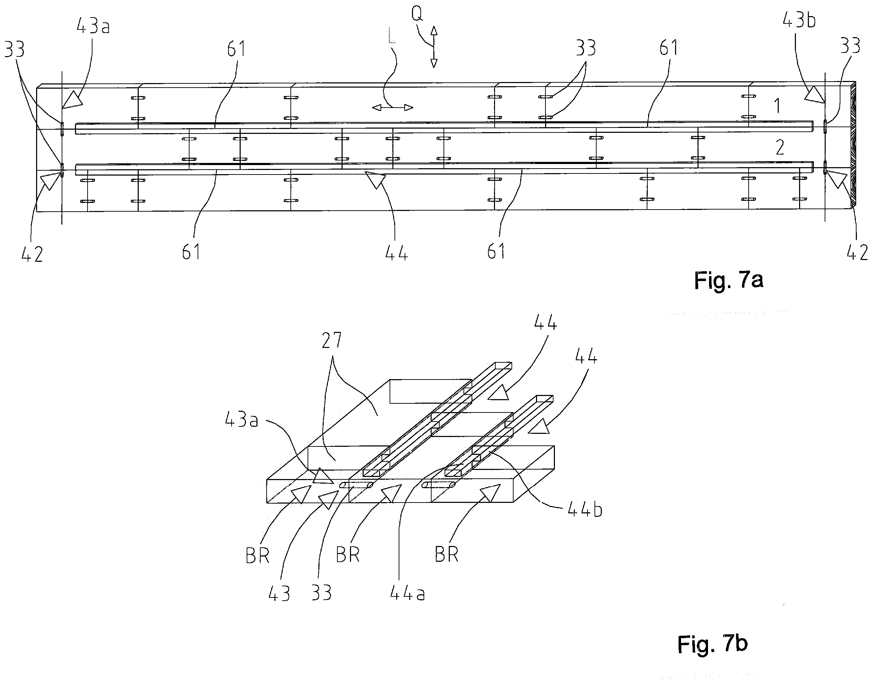

Im Falle keilgezinkter oder geschäfteter Lamellen ist ein Versatz nicht erforderlich. Der Querverbund kann hierbei gemäß der ersten Variante gemäß Figur 6 ebenfalls durch in Bohrungen 35 eingetriebene Dübel 33 (oder wie bei der Variante gemäß Figur 7a und 7b nachfolgend noch gezeigt durch nut- oder federartige Verbindungen evtl. in Verbindung mit Enddübeln an den Brettabschnitten 43a und/oder 43b zur Verminderung einer Relativverschiebung der Einzelbretter in Längsrichtung L) ausgeführt sein (Endblockierung 42).

Gemäß Figur 7a und 7b wird also eine Querfügevariante durch Fügung in Querrichtung Q (also senkrecht zur Längsrichtung L der einzelnen Bretter BR) realisiert, bei der die Längsfügung wie gezeigt beispielsweise unter Verwendung von Dübeln 33 (insbesondere Holzdübel und dabei insbesondere aus Laubholz bestehende Holzdübel, beispielsweise in Form von Buche) realisiert ist. Die Querfügung erfolgt sodann mittels abschnittsweiser Nut- und Federverbindung 44 (wobei an der einen Längsfügekante eine Feder 44a ausgebildet ist, die an der angrenzenden Längsfügekante eines benachbarten längsgefügten Brettes BR in eine dort ausgebildete Nut oder Längsnut 44b eingreift). Dabei wird eine Endblockierung 42 bezüglich der Lamellen verwirklicht, also der längsgefügten Bretter BR im Bereich der Endbrettabschnitte 43a und 43b, die jeweils die Längsfügekanten in Querrichtung überbrücken. Auch hier werden bevorzugt Laubholzdübel zur Verminderung einer Relativverschiebung der Lamellen eingesetzt. Auch bei dieser Variante können alle oben genannten anderen Fügeverbindungsvarianten eingesetzt werden, also alternativ oder ergänzend Rillennägel, Klammern, Klebeverbindungen, um die Querfügung an den Längsseiten der längsgefügten Bretter zu realisieren.

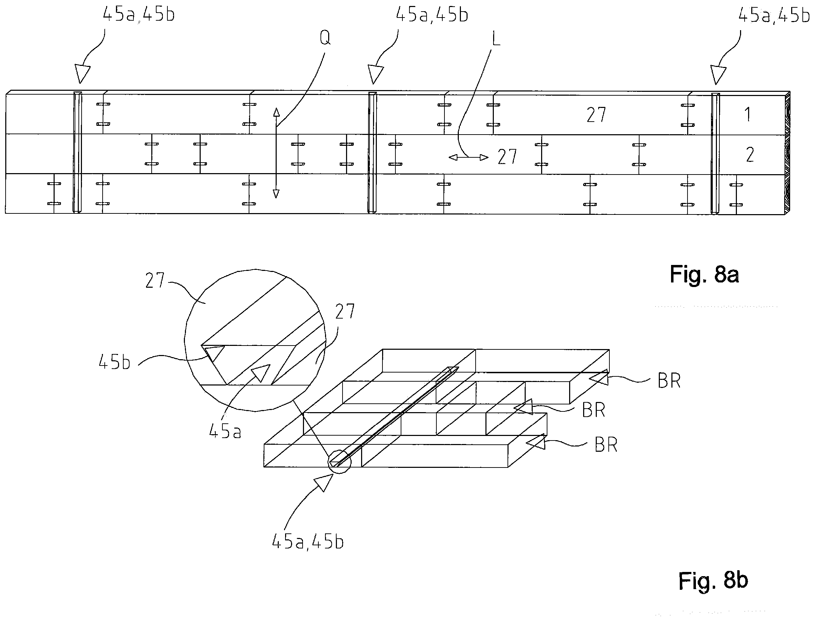

Anhand von Figur 8a unter vergrößerten Detaildarstellungen gemäß Figur 8b ist lediglich gezeigt, dass beispielsweise an verschiedenen Stellen in Längsrichtung L versetzt liegend und dabei senkrecht dazu in Querrichtung Q verlaufend nutförmige und vorzugsweise schwalbenschwanzförmige Ausnehmungen 45b über mehrere längsgefügte Leisten hinweg eingebracht werden, in denen dann ein entsprechendes nutförmiges bzw. schwalbenschwanzförmiges Passstück 45a bevorzugt aus Laubholz eingesetzt wird, welches zusätzlich über Dübel gehalten und/oder verklebt sein kann. Dadurch lässt sich beispielsweise eine Längsfügung unter Verwendung von Hirnholzdübeln und eine Querfügung beispielsweise mittels Schwalbenschwanz-Passstücken realisieren.

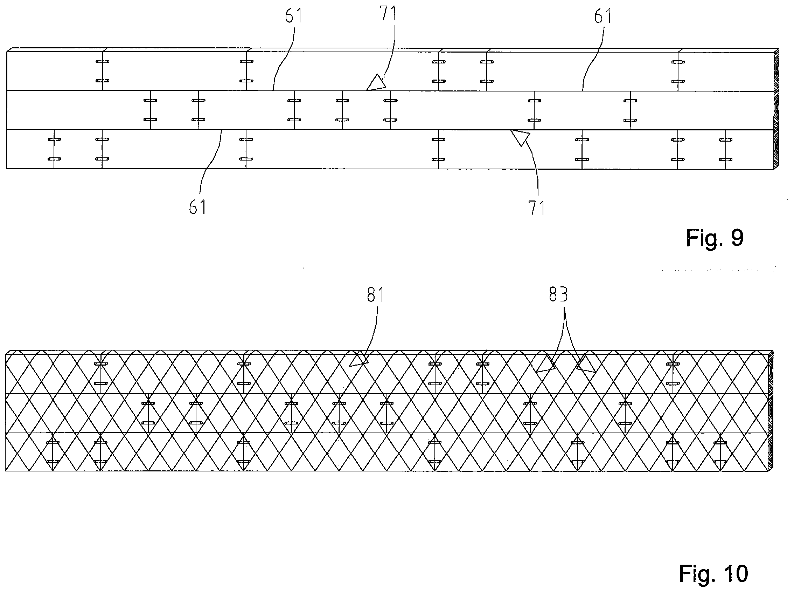

Anhand von Figur 9 ist gezeigt, dass beim Querverfügen die Längsseiten der einzelnen Bretter oder Leisten jeweils mit einem doppelseitigen Klebeband 71 an den Längsstößen 61 verklebt werden, um die Querfügung zwischen den einzelnen Laubholzleisten zu realisieren. Alternativ zum Klebeband 71 kann auch eine übliche Verklebung der Schmalkanten mittels beliebiger Klebstofftypen und Verklebungsarten vorgenommen werden (z.B. Schmelzklebstoffe, Dispersionskleber, Polykondensations- und Polyadditionsklebstoffe).

Bei der Variante gemäß Figur 10 ist die Querfügung bzw. die Längs- und die Querfügung mittels eines aufgeklebten Schmelzklebebelages 81 realisiert, vorzugsweise in Form eines netzartigen mit einem sehr dünnen Gitter versehenen Schmelzklebebelages. Die Gitterstruktur 83 dieses Schmelzklebebelages ist in Figur 10 eingezeichnet. Dieser Klebebelag vorzugsweise in Form eines Schmelzklebebelages und/oder in Form eines einseitig klebenden Klebebands oder Klebefolie wird bevorzugt auf beiden gegenüberliegenden Breitseiten des Gesamtverbundes aufgeklebt, worüber die Quer- und insbesondere Längs- und Querverfügung realisiert wird.

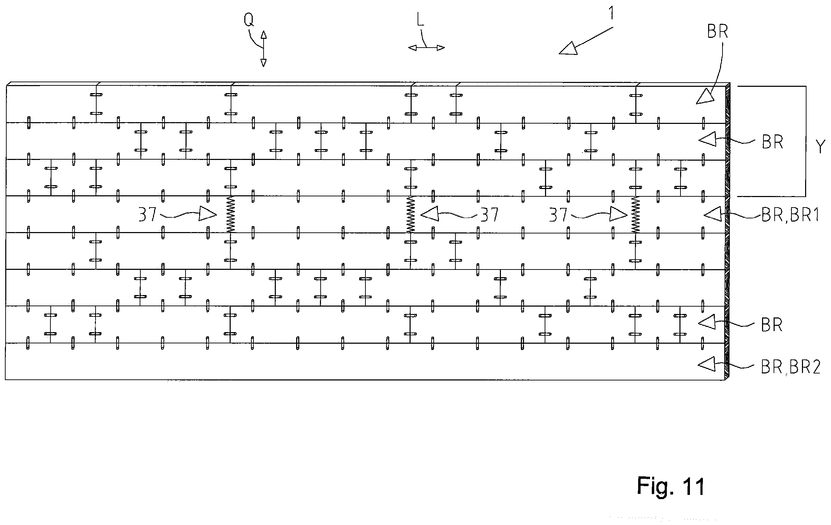

Schließlich ist anhand von Figur 11 abschließend noch gezeigt, wie ein größerer Querlagenabschnitt im Rahmen der Erfindung realisiert werden kann.

Bei Biegebeanspruchung der Gesamtplatte 1 in Querrichtung, bei denen die Querlagen somit Biegezugspannungen in Längsrichtung der aus Abschnitten gestoßenen Kurzabschnitte übertragen müssen, können über die konstruktiven Längsdübelverbindungen keine planmäßigen Kräfte übertragen werden. Die Biegezugspannungen müssen sodann über Lastumleitung durch Schubspannungen in den Decklagen im Stoßbereich umgelenkt werden. Dies ist bei geringer Querbiegebeanspruchung der Plattenelemente unproblematisch. Bei größerer Querbiegebeanspruchung und bei planmäßig allseitig gelagerten Platten müssen jedoch ungestoßene Querlagenbretter bzw. Querlagenbretter mit kraftschlüssig z.B. durch Keilzinkung 37 verbundenen Brettern vorhanden sein, um die Kräfte aufzunehmen. Diese Variante wird in Figur 11 veranschaulicht, wobei alternierend mit einem größeren Querlagenabschnitt, bei dem ein Verbund Y mit einer Anzahl x (hier x = 3) in Querrichtung Q bestehend aus nur konstruktiv dübelgefügter Bretter BR, entweder eine keilgezinkte oder/und eine durchlaufende Lamelle, d.h. ein durchlaufendes Brett BR, BR1 bzw. BR, BR2 zur planmäßigen Aufnahme des Querbiegemoments angeordnet ist. In Abhängigkeit von der Höhe der Querbeanspruchung kann die Anzahl der konstruktiv gestoßenen Bretter und der durchlaufenden bzw. kraftschlüssig gestoßenen (Keilzinkung/Schäftung) Bretter beliebig variiert werden. Die durchlaufenden Bretter können hierbei auch aus anderen (hochfesten) Vollholz- bzw. Holzwerkstoffen bestehen, z.B. aus Furnierschichtholz aus Nadel- oder Laubholz.Die Erfindung ist anhand eines dreilagigen Aufbaus erläutert worden. Eine entsprechende Brettsperrholz-Platte 1 kann aber auch mehrere Lagen aufweisen, wobei bevorzugt immer neben den Nadelholz-Lagen 3a, 3c etc., die in Längsrichtung gefügt sind, eine Zwischenlage 3b vorgesehen ist, die überwiegend oder ganz unter Verwendung von Laubhölzern und Laubholzstücken aufgebaut ist.

Von daher ist bevorzugt der Gesamtaufbau einer derartigen Brettsperrholz-Platte symmetrisch zu einer Mittellage, so dass eine entsprechende Brettsperrholz-Platte bevorzugt eine ungeradzahlige Anzahl von Lagen aufweist, beispielsweise sieben Lagen mit vier längsgefügten ganz oder überwiegend aus Nadelhölzern bestehenden Holzlagen und mit jeweils zwischen zwei derartigen Holzlagen dazwischen befindlichen Querlagen, die wie erwähnt zumindest überwiegend aus Laubhölzern bzw. Laubholzstücken quer verfügt sind. Grundsätzlich ist aber auch ein symmetrischer Aufbau möglich mit einer geradzahligen Anzahl von Lagen.

Die Laubholzstücke können dabei ferner vorzugsweise zumindest zu einem Anteil von 40%, insbesondere vorzugsweise von mehr als 50%, 60%, 70%, 80%, 90% oder zu 100% nicht einer Sortierklasse nach DIN-Norm DIN 4074-5 (vom Dezember 2008) oder vergleichbaren DIN EN 14081-1 (vom Mai 2001) bzw. einen vorliegenden Entwurf vom Januar 2014 konformen europäischen Sortiernormen oder vergleichbaren internationalen Sortiernormen entsprechen, sondern aus Ausschuss-Laubholzstücken hinsichtlich der Festigkeitssortierung bestehen. Die erwähnte DIN-Norm DIN 4074-5 datiert vom Dezember 2008 und DIN EN 14081-1 datiert wie erwähnt vom Mai 2011 bzw. im Hinblick auf einen neueren Entwurf der DIN-Norm DIN EN 14081-1 vom Januar 2014.

## Patentansprüche

1. Brettsperrholz-Platte mit folgenden Merkmalen:
- mit zumindest drei Holzlagen (3a, 3b, 3c),
- mit zwei quer zu ihrer flächigen Breitseite parallel zueinander liegenden Holzlagen (3a, 3c), wobei zwischen den beiden parallel zueinander liegenden Holzlagen (3a, 3c) zumindest eine Zwischenlage (3b) angeordnet ist, wobei die zumindest drei Holzlagen (3a, 3b, 3c) jeweils auf ihrer flächigen Breitseite aufeinander liegend zu einem festen Verbund zusammengefügt sind,
- die zumindest beiden Holzlagen (3a, 3c) bestehen zu zumindest 80 Gewichtsprozent und/oder zumindest 80 Volumenprozent aus Nadelhölzern,
- die zumindest eine Zwischenlage (3b) besteht zu zumindest 80 Gewichtsprozent und/oder zumindest 80 Volumenprozent aus Laubhölzern,
- die Laubhölzer umfassende Zwischenlage (3b) umfasst eine Vielzahl von Laubholzstücken (27), und
- die Vielzahl von Laubholzstücken (27) ist zur Erzeugung mehrerer durchgängiger Bretter (BR) in Längsrichtung (L) miteinander verfügt,
- die mehreren zu einem durchgängigen Brett (BR) längsverfügten Bretter (BR) sind zur Erzeugung eines plattenartigen Verbundes (V) in Querrichtung (Q) miteinander verfügt.

2. Brettsperrholz-Platte nach Anspruch 1, **dadurch gekennzeichnet, dass** im Bereich der Fügekanten gegebenenfalls vorhandene Lücken oder Abstände mit Klebstoff befüllt sind.

3. Brettsperrholz-Platte nach Anspruch 1 oder 2, **dadurch gekennzeichnet, dass** die zumindest eine Laubholz umfassende Zwischenschicht (3b) überwiegend aus Buche und/oder auch anderen Laubholzarten wie z.B. vorzugsweise Pappel und/oder Birke und/oder American Whitewood (Liriodendron tulipifera) und/oder Light und/oder Dark Red Meranti besteht, insbesondere zumindest aus 80 Gewichtsprozent und/oder 80 Volumenprozent und vorzugsweise aus zumindest 90 oder 95 Gewichts- und/oder Volumenprozent aus Buche besteht.

4. Brettsperrholz-Platte nach Anspruch 1, 2 oder 3, **dadurch gekennzeichnet, dass** die Laubholzstücke (27) zumindest zu einem Anteil von 40%, vorzugsweise von mehr als 50%, 60%, 70%, 80%, 90% oder zu 100% nicht einer Sortierklasse nach DIN-Norm DIN 4074-5 (vom Dezember 2008) oder vergleichbaren DIN-Normen, insbesondere der DIN-Norm DIN EN 14081-1 (vom Mai 2011 oder vom Januar 2014 bezüglich eines vorliegenden Entwurfs) entsprechen, sondern aus Ausschuss-Laubholzstücken hinsichtlich der Festigkeitssortierung bestehen.

5. Brettsperrholz-Platte nach einem der Ansprüche 1 bis 4, **dadurch gekennzeichnet, dass** die Laubholzstücke (27) zumindest ein oder zumindest einige Kurzstücke umfassen, die kürzer als 60 cm, insbesondere kürzer als 40 cm, 30 cm und kürzer als 20 cm sind.

6. Brettsperrholz-Platte nach einem der Ansprüche 1 bis 5, **dadurch gekennzeichnet, dass** ein längsgefügtes Brett (BR) zumindest 3 Laubholzstücke (27), vorzugsweise mehr als 7 oder mehr als 9 Laubholzstücke (27) umfasst.

7. Brettsperrholz-Platte nach einem der Ansprüche 1 bis 6, **dadurch gekennzeichnet, dass** zumindest einige Laubholzstücke (27), die zu einem längsgefügten Brett (BR) verarbeitet sind, unterschiedlich lang ausgebildet sind.

8. Brettsperrholz-Platte nach einem der Ansprüche 1 bis 7, **dadurch gekennzeichnet, dass** alle Laubholzstücke (27) eines längsgefügten Brettes (BR) eine gleiche Breite (B) aufweisen.

9. Brettsperrholz-Platte nach einem der Ansprüche 1 bis 8, **dadurch gekennzeichnet, dass** die benachbart zueinander angeordneten Stirnseiten (29) oder Fügekanten (31) zweier benachbarter längsgefügter Laubholzstücke (27) senkrecht oder quer zur Längsrichtung (L) der Laubholzstücke (27) und/oder des längsgefügten Bretts (BR) verlaufen.

10. Brettsperrholz-Platte nach Anspruch 9, **dadurch gekennzeichnet, dass** die benachbart zueinander liegenden Stirnseiten (29) und/oder Fügekanten (31) zweier benachbarter längsgefügter Laubholzstücke (27) Abschnitte umfassen, die senkrecht, quer oder parallel zur Längsrichtung (L) der Laubholzstücke (27) und/oder des längsgefügten Brettes (BR) verlaufen.

11. Brettsperrholz-Platte nach einem der Ansprüche 9 oder 10, **dadurch gekennzeichnet, dass** zwei benachbarte Stirnseiten (29) und die dadurch gebildete Fügekante (31) zweier benachbarter längsgefügter Laubholzstücke (27) eine Abstufung (41) aufweist, die senkrecht oder schräg zur Längsrichtung (L) des längsgefügten Brettes (BR) und in Quer- oder Längsrichtung (L) verlaufende Abschnitte umfasst.

12. Brettsperrholz-Platte nach einem der Ansprüche 1 bis 11, **dadurch gekennzeichnet, dass** zwei aufeinander folgende Laubholzstücke (27) eines längsgefügten Brettes (BR) mittels zumindest eines und vorzugsweise zumindest mittels zweier versetzt zueinander angeordneter Dübel (33) und/oder mittels Kleber längsgefügt sind.

13. Brettsperrholz-Platte nach einem der Ansprüche 1 bis 12, **dadurch gekennzeichnet, dass** zwei aufeinander folgende Laubholzstücke (27) eines längsgefügten Brettes (BR) mittels einer Keilzinkenverbindung (37) und/oder Schäftung und/oder mittels eines Klebers längsgefügt sind.

14. Brettsperrholz-Platte nach einem der Ansprüche 1 bis 13, **dadurch gekennzeichnet, dass** mehrere längsgefügte Bretter (BR) in Querrichtung (Q) quergefügt sind, nämlich
a) mittels in Längsrichtung (L) versetzt zueinander liegenden und über den jeweiligen seitlichen Längsstoß (61) hinweg eingebrachte Dübel (33) und/oder
b) mittels einer in Querrichtung (Q) über mehrere Bretter (BR) hinwegverlaufenden Nut- und Federverbindung (44), bei der eine an einer Längsseite (L) eines Brettes (BR) zumindest in einer Teillänge vorstehenden Feder (44a) in einer an einer benachbarten Längsseite eines benachbarten Brettes (BR) eingebrachte Nut (44b) eingreift, und/oder
c) mittels einer Schwalbenschwanz-Verbindung vorzugsweise mit einer zu einer Breitseite der mehreren nebeneinander angeordneten Brettern (BR) weisenden Öffnung einer schwalbenschwanzförmigen Ausnehmung (45b), in die ein schwalbenschwanzförmiges Passstück (45a) eingesetzt ist, und/oder
d) mittels eines doppelseitigen Klebebandes (71), worüber zwei aufeinander zuweisende benachbarte Längsseiten oder -stöße (61) zweier benachbarter Bretter (BR) miteinander quergefügt sind, und/oder
e) mittels eines auf einer und vorzugsweise auf beiden gegenüberliegenden Breitseiten oder Außenseiten über mehrere benachbarte Bretter (BR) hinwegverlaufenden Schmelzklebebelags (81), der vorzugsweise über eine dünne netzartige Gitterstruktur (83) verfügt.

15. Brettsperrholz-Platte nach einem der Ansprüche 1 bis 14, **dadurch gekennzeichnet, dass** zur Erhöhung der Tragfähigkeit und -steifigkeit zumindest einzelne Bretter (BR), die parallel zu Brettern (BR) mit gedübelten oder versatzmäßig ausgebildeten Stufen (31, 34) angeordnet sind, aus höherfesten Brettern (BR) und/oder Laubholzstücken (27) gebildet sind.

## Claims

1. A cross-laminated timber panel having the following features:
- having at least three wood layers (3a, 3b, 3c),
- having two wood layers (3a, 3c) lying parallel to one another transversely to their flat broad side, wherein at least one intermediate layer (3b) is arranged between the two wood layers (3a, 3c) lying parallel to one another, the at least three wood layers (3a, 3b, 3c) are each stacked to join together on their flat broad side to form a solid composite,
- the at least two wood layers (3a, 3c) consist of at least 80 percent by weight and/or at least 80 percent by volume of coniferous wood,
- the at least one intermediate layer (3b) consists of at least 80 percent by weight and/or at least 80 percent by volume of hardwood,
- the intermediate layer (3b) comprising hardwoods comprises a plurality of hardwood pieces (27), and
- the plurality of hardwood pieces (27) are interconnected to produce several continuous boards (BR) in the longitudinal direction (L),
- the several boards (BR) arranged lengthways to form a continuous board (BR) are interconnected with one another to create a board-like composite (V) in the transverse direction (Q).

2. The cross-laminated timber panel according to claim 1, **characterised in that** any gaps or spaces that may be present in the region of the joining edges are filled with adhesive.

3. The cross-laminated timber panel according to claim 1 or claim 2, **characterised in that** the intermediate layer (3b) comprising at least one hardwood is predominantly made of beech and/or other types of hardwood, such as preferably poplar and/or birch and/or American whitewood (*Liriodendron tulipifera*) and/or Light and/or Dark Red Meranti, in particular at least 80 percent by weight and/or 80 percent by volume and preferably at least 90 or 95 percent by weight and/or volume made of beech.

4. The cross-laminated timber panel according to any of claims 1, 2 or 3, **characterised in that** at least 40%, preferably more than 50%, 60%, 70%, 80%, 90% or 100% of the pieces of hardwood (27) do not correspond to a grading class according to DIN standard DIN 4074-5 (from December 2008) or comparable DIN standards, in particular DIN standard DIN EN 14081-1 (from May 2011 or from January 2014 concerning an existing draft), but rather correspond to scrap-hardwood in terms of strength grading.

5. The cross-laminated timber panel according to any of claims 1 to 4, **characterised in that** the hardwood pieces (27) comprise at least one or at least some short pieces that are shorter than 60 cm, in particular shorter than 40 cm, 30 cm and shorter than 20 cm.

6. The cross-laminated timber panel according to any of claims 1 to 5, **characterised in that** a longitudinally-joined board (BR) comprises at least 3 pieces of hardwood (27), preferably more than 7 or more than 9 pieces of hardwood (27).

7. The cross-laminated timber panel according to any of claims 1 to 6, **characterised in that** at least some pieces of hardwood (27) which are processed into a longitudinally-joined board (BR) are of different lengths.

8. The cross-laminated timber panel according to any of claims 1 to 7, **characterised in that** all pieces of hardwood (27) of a longitudinally-joined board (BR) have the same width (B).

9. The cross-laminated timber panel according to any of claims 1 to 8, **characterised in that** the adjacent end faces (29) or joining edges (31) of two adjacent longitudinally-joined hardwood pieces (27) are perpendicular or transverse to the longitudinal direction (L) of the hardwood pieces (27) and/or of the longitudinally-joined board (BR).

10. The cross-laminated timber panel according to claim 9, **characterised in that** the adjacent end faces (29) and/or joining edges (31) of two adjacent longitudinally-joined hardwood pieces (27) comprise sections which are perpendicular, transverse or parallel to the longitudinal direction (L) of the hardwood pieces (27) and/or the longitudinally-joined board (BR).

11. The cross-laminated timber panel according to any of claims 9 or 10, **characterised in that** two adjacent end faces (29) and the joining edge (31) formed thereby of two adjacent longitudinally-joined pieces of hardwood (27) comprise a step (41) which is perpendicular or oblique to the longitudinal direction (L) of the longitudinally-joined board (BR) and in sections extending in a transverse or longitudinal direction (L).

12. The cross-laminated timber panel according to any of claims 1 to 11, **characterised in that** two successive pieces of hardwood (27) of a longitudinally-joined board (BR) are joined longitudinally by means of at least one and preferably at least two dowels (33) arranged offset to one another and/or by means of adhesive.

13. The cross-laminated timber panel according to any of claims 1 to 12, **characterised in that** two successive pieces of hardwood (27) of a longitudinally-joined board (BR) are joined longitudinally by means of a finger joint (37) and/or scarf joint and/or by means of an adhesive.

14. The cross-laminated timber panel according to any of claims 1 to 13, **characterised in that** several longitudinally-joined boards (BR) are joined transversely in the transverse direction (Q), namely
a) by means of dowels (33) which are offset from one another in the longitudinal direction (L) and are inserted over the respective lateral longitudinal joint (61), and/or
b) by means of a tongue and groove joint (44) running across several boards (BR) in the transverse direction (Q), in which at least in a partial length a tongue (44a) projecting on one longitudinal side (L) of a board (BR) engages in a groove (44b) made on an adjacent longitudinal side of an adjacent board (BR), and/or
c) by means of a dovetail joint, preferably with an opening of a dovetail-shaped recess (45b) facing a broad side of the several boards (BR) arranged side by side, into which a dovetail-shaped fitting piece (45a) is inserted, and/or
d) by means of a double-sided adhesive tape (71), through which two adjacent longitudinal sides or joints (61) of two adjacent boards (BR) facing one another are joined together transversely, and/or
e) by means of a hot-melt adhesive covering (81) running over several adjacent boards (BR) on one and preferably on both opposite broad sides or outer sides, which preferably has a thin net-like lattice structure (83).

15. Cross laminated timber panel according to any of claims 1 to 14, **characterised in that**, in order to increase the load-bearing capacity and stiffness, at least individual boards (BR), which are arranged parallel to boards (BR) with dowelled or offset steps (31, 34), are formed from higher-strength boards (BR) and/or hardwood pieces (27).

## Revendications

1. Panneau de bois contre-plaqué pour planches présentant les éléments suivants :
- au moins trois couches de bois (3a, 3b, 3c),
- deux couches de bois (3a, 3c) parallèles entre elles transversalement à leur grand côté plat, au moins une couche intermédiaire (3b) étant disposée entre les deux couches de bois (3a, 3c) parallèles entre elles, lesdites au moins trois couches de bois (3a, 3b, 3c) étant assemblées pour former un ensemble solide en étant superposées sur leur grand côté plat,
- lesdites au moins deux couches de bois (3a, 3c) sont constituées d'au moins 80 % en poids et/ou d'au moins 80 % en volume de bois de conifères,
- ladite au moins une couche intermédiaire (3b) est constituée d'au moins 80 % en poids et/ou d'au moins 80 % en volume de bois de feuillus,
- la couche intermédiaire (3b) contenant des bois de feuillus comprend une multitude de morceaux de bois de feuillus (27), et
- la multitude de morceaux de bois de feuillus (27) sont assemblés entre eux en direction longitudinale (L) pour former plusieurs planches continues (BR),
- les planches (BR) assemblées longitudinalement en une planche continue (BR) sont assemblées entre elles en direction transversale (Q) pour former un ensemble (V) en forme de panneau.

2. Panneau de bois contre-plaqué selon la revendication 1,
**caractérisé en ce que** des espaces ou écartements présents le cas échéant dans la zone des bords d'assemblage sont remplis de colle.

3. Panneau de bois contre-plaqué selon la revendication 1 ou 2,
**caractérisé en ce que** ladite au moins une couche intermédiaire (3b) contenant du bois de feuillus consiste majoritairement en hêtre et/ou également en autres espèces de feuillus comme, par exemple, de préférence du peuplier et/ou du bouleau et/ou du bois blanc d'Amérique (Liriodendron tulipifera) et/ou du meranti rouge clair et/ou foncé, en particulier d'au moins 80 % en poids et/ou 80 % en volume et de préférence d'au moins 90 ou 95 % en poids et/ou en volume de hêtre.

4. Panneau de bois contre-plaqué selon la revendication 1, 2 ou 3,
**caractérisé en ce que**, au moins dans une proportion de 40 %, de préférence de plus de 50 %, 60 %, 70 %, 80 %, 90 % ou de 100 %, les morceaux de bois de feuillus (27) ne correspondent pas à une classe de tri selon la norme DIN 4074-5 (de décembre 2008) ou selon des normes DIN comparables, en particulier selon la norme DIN EN 14081-1 (de mai 2011 ou de janvier 2014 pour ce qui concerne un projet déposé), mais sont constituées de morceaux de bois de feuillus de rebut en ce qui concerne le tri par résistance.

5. Panneau de bois contre-plaqué selon l'une des revendications 1 à 4,
**caractérisé en ce que** les morceaux de bois de feuillus (27) comprennent au moins un ou plusieurs morceaux courts qui sont inférieurs à 60 cm, en particulier inférieurs à 40 cm, 30 cm et inférieurs à 20 cm.

6. Panneau de bois contre-plaqué selon l'une des revendications 1 à 5,
**caractérisé en ce qu'**une planche assemblée longitudinalement (BR) comprend au moins 3 morceaux de bois de feuillus (27), de préférence plus de 7 ou plus de 9 morceaux de bois de feuillus (27).

7. Panneau de bois contre-plaqué selon l'une des revendications 1 à 6,
**caractérisé en ce qu'**au moins certains morceaux de bois de feuillus (27) transformés en une planche assemblée longitudinalement (BR) sont de longueurs différentes.

8. Panneau de bois contre-plaqué selon l'une des revendications 1 à 7,
**caractérisé en ce que** tous les morceaux de bois de feuillus (27) d'une planche assemblée longitudinalement (BR) ont la même largeur (B).

9. Panneau de bois contre-plaqué selon l'une des revendications 1 à 8,
**caractérisé en ce que** les faces frontales (29) ou les bords d'assemblage (31) adjacent(e)s de deux morceaux de bois de feuillus (27) adjacents assemblés longitudinalement s'étendent perpendiculairement ou transversalement à la direction longitudinale (L) des morceaux de bois de feuillus (27) et/ou de la planche assemblée longitudinalement (BR).

10. Panneau de bois contre-plaqué selon la revendication 9,
**caractérisé en ce que** les faces frontales (29) et/ou les bords d'assemblage (31) adjacent(e)s de deux morceaux de bois de feuillus (27) adjacents assemblés longitudinalement comprennent des portions qui sont perpendiculaires, transversales ou parallèles à la direction longitudinale (L) des morceaux de bois de feuillus (27) et/ou de la planche assemblée longitudinalement (BR).

11. Panneau de bois contre-plaqué selon l'une des revendications 9 ou 10,
**caractérisé en ce que** deux faces frontales adjacentes (29) et le bord d'assemblage (31) ainsi formé de deux morceaux de bois de feuillus (27) adjacents assemblés longitudinalement présentent un gradin (41) comprenant des portions qui s'étendent perpendiculairement ou en oblique par rapport à la direction longitudinale (L) de la planche assemblée longitudinalement (BR) et des portions qui s'étendent dans la direction transversale ou longitudinale (L).

12. Panneau de bois contre-plaqué selon l'une des revendications 1 à 11,
**caractérisé en ce que** deux morceaux de bois de feuillus (27) successifs d'une planche assemblée longitudinalement (BR) sont assemblés longitudinalement au moyen d'au moins une et de préférence d'au moins deux chevilles (33) disposées de façon décalée l'une par rapport à l'autre et/ou au moyen d'une colle.

13. Panneau de bois contre-plaqué selon l'une des revendications 1 à 12,
**caractérisé en ce que** deux morceaux de bois de feuillus (27) successifs d'une planche assemblée longitudinalement (BR) sont assemblés longitudinalement au moyen d'un assemblage à dents coniques (37) et/ou d'un emboîtement et/ou au moyen d'une colle.

14. Panneau de bois contre-plaqué selon l'une des revendications 1 à 13,
**caractérisé en ce que** plusieurs planches assemblées longitudinalement (BR) sont assemblées transversalement dans la direction transversale (Q), à savoir
a) au moyen de chevilles (33) décalées les unes par rapport aux autres dans la direction longitudinale (L) et insérées au-delà du joint longitudinal latéral respectif (61), et/ou
b) au moyen d'une liaison à rainure et languette (44) s'étendant dans la direction transversale (Q) sur plusieurs planches (BR), dans laquelle une languette (44a) faisant saillie sur un côté longitudinal (L) d'une planche (BR) au moins sur une longueur partielle s'engage dans une rainure (44b) ménagée sur un côté longitudinal adjacent d'une planche (BR) adjacente, et/ou
c) au moyen d'une liaison en queue d'aronde, de préférence avec une ouverture d'une cavité en queue d'aronde (45b) dirigée vers un grand côté desdites plusieurs planches (BR) disposées les unes à côté des autres, cavité dans laquelle est insérée une cale d'ajustage en queue d'aronde (45a), et/ou
d) au moyen d'un ruban adhésif double face (71) par lequel deux côtés ou joints longitudinaux adjacents (61) dirigés l'un vers l'autre de deux planches adjacentes (BR) sont assemblés transversalement, et/ou
e) au moyen d'un revêtement adhésif thermofusible (81) s'étendant sur plusieurs planches adjacentes (BR) sur l'un et de préférence sur les deux grands côtés ou faces extérieures opposé(e)s, revêtement qui présente de préférence une structure en grille fine de type filet (83).

15. Panneau de bois contre-plaqué selon l'une des revendications 1 à 14,
**caractérisé en ce que**, pour augmenter la capacité de charge et la rigidité, au moins des planches individuelles (BR), qui sont disposées parallèlement aux planches (BR) ayant des gradins (31, 34) chevillés ou décalés, sont formées de planches (BR) et/ou de morceaux de bois de feuillus (27) plus résistant(e)s.
